Europäisches Patentamt

European Patent Office

Office européen des brevets

(11) Publication number: **0 484 610 A1**

# EUROPEAN PATENT APPLICATION

(21) Application number: **90830508.9**

(22) Date of filing: **08.11.90**

(51) Int. Cl.⁵: **H02M 3/335**

(43) Date of publication of application:
**13.05.92 Bulletin 92/20**

(84) Designated Contracting States:
**BE CH DE FR GB IT LI NL**

(71) Applicant: **BULL HN INFORMATION SYSTEMS
ITALIA S.p.A.
Via Martiri d'Italia 3
I-10014 Caluso (Torino)(IT)**

(72) Inventor: **Cozzi, Daniele
Piazza A. Toscanini 18
I-20014 Nerviano (MI)(IT)**
Inventor: **Montorfano, Gianpaolo
Via Cuore Immacolato di Maria 2
I-20141 Milano(IT)**

(54) D.C. switching power supply having controlled voltage output and output isolation from the input.

(57) In a switching power supply of the feed forward or push pull type, the voltage self induced in an output filtering inductor (7), which periodically equals an output voltage (V0) to be controlled, is detected by means of a measurement winding (11), magnetically coupled to the inductor (7) and used to charge a measurement capacitor (13) at a voltage level univocally related to the detected voltage, the charging voltage of the measurement capacitor or a fraction thereof being input as feedback signal, obtained by circuits electrically isolated from the power supply output, to control circuits (10) of the power supply.

The present invention relates to a DC switching power supply having controlled voltage output and output isolation from the input, in particular a power supply of the so called "feed forward" or "push pull" type.

The switching power supplies having controlled voltage output for generating one or more DC controlled voltages (used for powering electronic circuits and equipments) require in general that the output voltage (or voltages) be electrically isolated from the input powering voltage.

Voltage control is obtained by periodically applying input voltage pulses having variable width and a fixed frequency to the primary windig of a power transformer.

These pulses induce corresponding voltage pulses in one or more secondary windings.

The voltage pulses induced in each of the secondary windings charge a buffer capacitor through a filtering inductor.

A nearly constant DC controlled voltage output is then available between the armatures of the capacitor.

Control is obtained by changing the "duty cycle" of the voltage pulses input to the primary winding of the trasformer, as a function of the error between the output voltage and a prestablished desired voltage. Therefore the output voltage (or one of the output voltages) must be transferred to control circuits which are electrically connected to the transformer primary winding.

In order to obtain an electrical isolation between input and output the use of a power tranformer does not suffice.

It is further required that the output voltage be transferred to the control circuits, through isolation devices.

The state of the art basically offers two alternatives, both expensive: optoelectronic devices and isolation transformer devices.

The transformer devices, however simple, require that the DC output voltage be converted in a pulsed or alternate voltage by means of chopping circuits which are relatively complex and expensive.

In addition the pulsed voltage in output from the isolation transformer must be filtered or rectified so as to obtain a DV voltage related to the output voltage which has to be controlled.

The present invention provides a power supply having output isolation from the input, in which the isolation of the feed back signal is obtained without use of optoelectronic devices or chopping circuits combined with an isolation transformer.

Therefore the present invention provides a power supply which is simple, unexpensive and at the same time effective.

The invention is based on the fact that in the feed forward switching power supplies, during the time interval in which no power is transferred from the primary winding to the secondary winding of the power transformer, the filtering inductor connected to the secondary winding transfers power to the output capacitor and is subjected to a self induced electromotive force having a value substantially equal to the charge voltage of the output capacitor, hence to the output voltage which must be controlled.

Therefore a secondary winding may be magnetically coupled to the filtering inductor and a feedback pulsed voltage may be obtained at the terminals of this secondary winding.

The value of such pulsed voltage is univocally related to the voltage to be controlled.

A D.C. voltage may be easily obtained from the pulsed voltage ( the D.C. voltage varying with the voltage to be controlled) and forms the feedback signal used for achieving the desired control.

The same inventive concept may be used in push pull switching power supplies, provided it is avoided, as it generally occurs, that the duty cycle of the voltage pulses input to the primary winding never reaches the 100% value and it is assured that, between each energization pulse and the next following one, there is always a time interval, even if short, during which the filtering inductor, connected to the secondary winding, is compelled to output some power.

The features and the advantages of the invention will appear more clearly from the following description of a preferred form of embodiment and from the enclosed drawings where:

- Figure 1 is the electrical drawing of a feddforward switching power supply having controlled voltage output and output isolation from the input.
- Figure 2 shows in timing diagram the voltage pulses induced in the secondary winding of the power transformer in the power supply of Fig.1.
- Figure 3 shows in timing diagram the current flowing in the filtering inductor of the power supply of Fig. 1.
- Fig. 4 shows in timing diagram, the voltage induced in a secondary winding coupled to the filtering inductor of the Fig. 1 power supply.
- Figure 5 is the electrical diagram of a pushpull switching power supply having controlled output voltage and output isolation from the input.

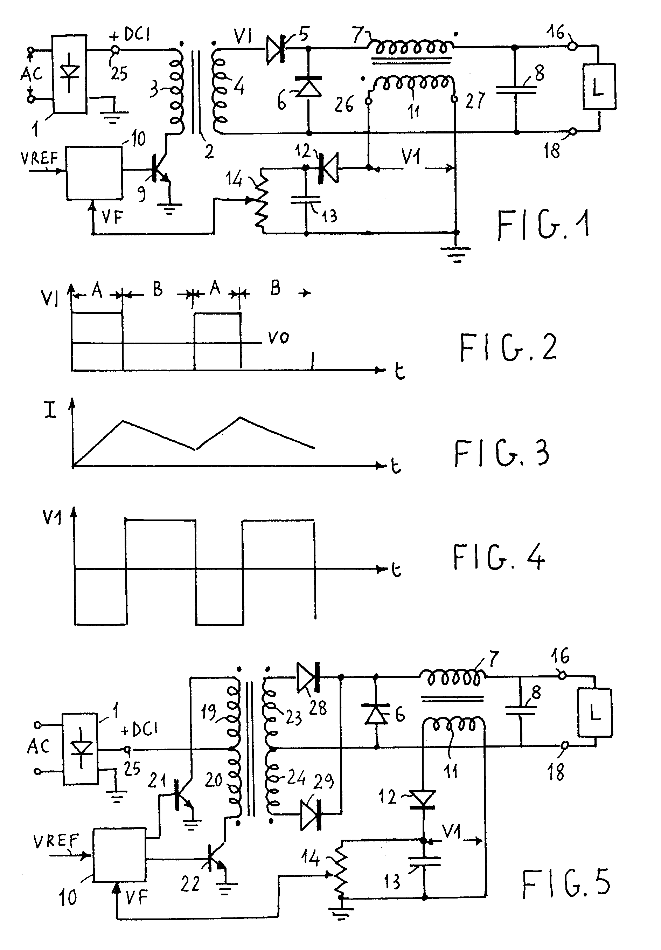

Figure 1 shows the electrical diagram of a feed forward power supply having controlled voltage output and output isolation from the input, in accordance with the invention.

The power supply comprises a rectifying bridge and input filtering unit 1, a power transformer 2 having a primary winding 3, a secondary winding 4, a blocking diode 5, a current recirculating diode 6, a filtering inductor 7, an output capacitor 8, a control switch 9 and a control circuit 10. All these elements are conventional constitutive elements of a feed forward switching power supply.

According to the invention the power supply further comprises a secondary winding 11, magnetically coupled to inductor 7 (the inductor 7 and winding 11 thus performing the further role of voltage transformer), a second blocking diode 12 and a buffer capacitor 13.

Even if not stricly required the power supply further comprises a voltage divider 14 parallel connected to capacitor 13.

Bridge 1 is powered by a main voltage source and outputs a DC unregulated voltage +DC1 between a terminal 25 and a conventional ground. The terminal 25 is connected to a terminal of the primary winding 3, the other terminal being periodically grounded through a switching transistor 9.

The switching transistor 9 is controlled by the control circuit 10, of a conventional type and available on the marked as an integrated circuit, with a broad choice range.

The circuit 10 receives, as input, a feedback voltage VF, univocally related to an output voltage V0 of the power supply, and a reference voltage VREF.

Depending on the error between the two voltages the control circuit 10 modulates the width of the time interval during which transistor 9 is conductive, thus driving the output voltage V0 to a value such that the error between the voltages VREF and VF is minimum.

A terminal 15 of the winding 4 is connected to the anode of diode 5, whose cathode is connected to a terminal of inductor 7, the other inductor terminal being connected to an armature of capacitor 8 and to an output terminal 16.

The other terminal of winding 4 is connected to the other armature of capacitor 8 and to an output terminal 18.

The cathode of the current recirculating diode 6 is connected to the cathod of diode 5 and its anode is connected to the output terminal 18.

The winding 11 is magnetically coupled to inductor 7 and has a terminal connected to the anode of the blocking diode 12. The other terminal and the cathode of diode 12 are respectively connected to the armatures of capacitor 13, parallel connected to the voltage divider 14.

Terminal 27 is further grounded.

The intermediate node of voltage divider 14 is connected to one input of control circuit 10 and supplies voltage VF thereto.

The operation of the power supply is very simple and is now described with reference to the timing diagrams of figures 2,3,4, respectively showing the voltage VI induced in secondary winding 4, the current I flowing in inductor 7 and the voltage V1 induced in secondary winding 11.

The +DCI voltage pulses input to primary winding 3 induce corresponding voltage pulses VI in the secondary winding 3.

The induced voltage causes a current flowing through diode 5 and inductor 7.

This current charges capacitor 8 to a value V0 to be controlled. Voltage V0 is available between terminals 16,18 and is used to power an external load L.

The current induced in winding 4 is limited by the counterelectromotive force developed in inductor 7.

During the time intervals (A) in which transformer 2 is energized, the following equation is true:

$$V1 = V7 + V0 + DV5$$

V7 is the voltage drop in inductor 7, which, neglecting the resistive component of the inductor 7 impedance, equals the counterelectromotive force induced in the inductor. DV5 is the voltage drop in diode 5.

In the time intervals A, the winding 11 is therefore subjected to an induced e.m.f., available between terminals 26,27 as a voltage V1 given by equation:

$$V1 = V7.N1/N2$$

where N1/N2 is the turn ration of winding 11 as to inductor 7.

This voltage is unrelated to V0 and is blocked by diode 12, thus unaffecting the charge status of capacitor 13.

During the time intervals in which transformer 2 is not energized (intervals B) the current previously induced in inductor 7 continues to flow towards capacitor 8 and load L, through the recycling diode 6 and decreases in time. Inductor 7 is subjected to a self induced e.m.f. whose value, neglecting the resistive voltage drop, is given by

$$V7 = V0-DV6$$

This voltage coincides with V0 except for the voltage drop DV6, in diode 6, which is relatively constant.

During the B time intervals, winding 11 is therefore subjected to an e.m.f., available at terminals 26,27 as a voltage V1 given by

$V1 = V7.N1/N2 = (V0- V5)N1/N2,$

hence univocally related to output voltage V0 to be controlled. This voltage directly bias diode 12 and loads capacitor 13 at a voltage level which differs from V1 for the relatively constant voltage drop in diode 12.

This voltage is held also during intervals A. In fact, discharge of capacitor 13 is prevented by diode 12 and occurs only through voltage divider 14 (and the input impedance of control circuit 10).

The resistance of voltage divider 14 may be choosen so that the time constant of the RC circuit formed by voltage divider 14 and capacitor 13 is sufficiently high so as to prevent any appreciable change in the charge status of capacitor 13 between a charging interval and the next one, but not so high as to limit the required frequency response of the control loop.

From voltage divider 14 a feedback voltage VF may be obtained, which is univocally related to voltage V0 and which may be used as a control voltage electrically insulated from the power supply output.

It is clear that the use of a voltage divider such as 14 is not strictly required and that a voltage VF, suitable as feedback signal input to control circuit 10, may be simply obtained by a suitable choice of the turn ration between inductor 7 and winding 11, the choice keeping in account the voltage drops in diodes 6 and 12.

The use of the voltage divider is however preferred because it provides a trimming facility for the power supply.

The preceding description relates to a feed forward power supply in which each powering interval A of the transformer is inherently followed by a time interval B having a duration sufficing for the demagnetization of the transformer itself.

Figure 5 shows the electrical drawing of a push pull power supply implemented in accordance with the present invention.

The drawing of Fig. 5 differs from that of Fig. 1 because the transformer 2 is provided with two primary windings 19,20 alternatively and periodically powered by a voltage + DCI by switching on two control transistor switches 21,22 instead of a single switch.

Transformer 2 is further provided with two secondary windings 23,24 having a common terminal.

The other terminal of the two secondary windings is connected to the anode of a blocking diode 28,29 respectively. The cathodes of diodes 28,29 are connected together and with a terminal of inductor 7.

The operation of the circuit of Fig. 5 is quite similar to the one of the Fig. 1 circuit except for the difference that a voltage V1 of opposite direction is alterntively induced in the two windings 23,24 and that the two windings alternatively output current pulses in mutually exclusive way during subsequent and distinct time intervals.

For the operation of the control circuit, in particular for generation of voltage VF, it suffices that the duty cycle of the power supply never reaches the 100% value.

In other words the energization intervals of the transformer 2 must be always severed by a dead time interval, during which the transformer is not powered.

This condition may be easily obtained in well known manner, by a suitable choice of the resistive and capacitive components of the control circuit 10, which components establish its operating frequency and dead time.

In a preferred, specific embodiment of a feed forward power supply, the following features have been established:

Controlled output power:
400 W
Controlled output voltage V0
38 V
Output ripple
100 mV
Inductor 7 inductance:
180 H
Inductor 7 resistence:
40 m
Turn ratio between inductor 7 and winding 11:
27/8
Voltage divider 14 resistance:
10 K
Capacitor 13 capacity:
10 F
Control circuit input impedance:
1 M
Control circuit 10:
UNITRODE 3844
Working frequency:
60 KHz
Frequency response of the control circuit:
0:5 KHz
Capacitor 8 capacity:
1000 F

In the figures 1,5 the power supply output is shown as completely isolated from the input and from ground, whilst the input circuits are grounded.

It is clear that the power supply grounding may be choosen at will and the output circuits may be grounded instead of the input circuits.

In addition even if the power supplies of fig. 1,5 are shown as having a single output, they may have a plurality of outputs for providing a plurality of output voltages, one of these being directly controlled as shown, the others being indirectly controlled and if required, being furhter intrinsecally controlled by related post regulation means.

**Claims**

1. Switching power supply of the type in which voltage pulses are periodically input to the primary winding of a transformer and width modulated by a control circuit receiving as input a feedback signal univocally related to an output voltage to be controlled, said input voltage pulses generating, in a secondary winding, voltage pulses which induce a charging current flowing through a filtering inductor and charging a buffer capacity at said output voltage to be controlled, a recycling diode providing a recycling path to said current flowing in said inductor and charging said buffer capacity, characterized in that it comprises a measurement secondary winding magnetically coupled to said inductor to form a transformer, a measurement capacitor on which said measurement secondary winding is closed, a blocking diode, connected between said secondary measurement winding and said measurement capacitor to enable the charging of said measurement capacity at a measurement voltage univocally related to the e.m.f. self induced in said inductor by changes in a current flowing in said inductor and through said recycling diode, and to prevent discharging of said measurement capacity, and circuit means for inputing at least a fraction of said measurement voltage to said control circuit as a feedback signal.

2. Power supply as claimed in claim 1 where said circuit means comprises a voltage divider connected in parallel to said measurement capacity.

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 616 301 (SMALL)<br>* Figure 3 *<br>--- | 1 | H 02 M 3/335 |
| A | EP-A-0 071 878 (TE KA DE FELTEN & GUILLEAUME)<br>* Abstract; figure 1 *<br>--- | 1 | |
| A | DE-A-2 700 547 (ROBERT BOSCH)<br>* Figure 1 *<br>----- | 1 | |
| | | | **TECHNICAL FIELDS SEARCHED (Int. Cl.5)**<br><br>H 02 M |

The present search report has been drawn up for all claims

| Place of search | Date of completion of the search | Examiner |
|---|---|---|
| THE HAGUE | 05-06-1991 | GENTILI L. |